(19) Europäisches Patentamt / European Patent Office / Office européen des brevets

(11) **EP 2 715 662 B1**

(12) **FASCICULE DE BREVET EUROPEEN**

(45) Date de publication et mention de la délivrance du brevet:
**17.07.2019 Bulletin 2019/29**

(21) Numéro de dépôt: **12726076.8**

(22) Date de dépôt: **29.05.2012**

(51) Int Cl.:
*G06T 7/579* (2017.01)     *G06T 7/73* (2017.01)

(86) Numéro de dépôt international:
**PCT/EP2012/060044**

(87) Numéro de publication internationale:
**WO 2012/163912 (06.12.2012 Gazette 2012/49)**

(54) **PROCEDE DE LOCALISATION D'UNE CAMERA ET DE RECONSTRUCTION 3D DANS UN ENVIRONNEMENT PARTIELLEMENT CONNU**

VERFAHREN ZUM LOKALISIEREN EINER KAMERA UND 3D-REKONSTRUKTION IN EINER TEILWEISE BEKANNTEN UMGEBUNG

METHOD FOR LOCALISATION OF A CAMERA AND 3D RECONSTRUCTION IN A PARTIALLY KNOWN ENVIRONMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.05.2011 FR 1154702**

(43) Date de publication de la demande:
**09.04.2014 Bulletin 2014/15**

(73) Titulaire: **Commissariat à l'Énergie Atomique et aux Énergies Alternatives 75015 Paris (FR)**

(72) Inventeurs:
• **TAMAAZOUSTI, Mohamed**
  **F-28100 Dreux (FR)**
• **BOURGEOIS, Steve**
  **F-94600 Choisy Le Roy (FR)**
• **DHOME, Michel**
  **F-63430 Pont Du Chateau (FR)**
• **GAY-BELLILE, Vincent**
  **F-75013 Paris (FR)**
• **NAUDET, Sylvie**
  **F-91120 Palaiseau (FR)**

(74) Mandataire: **Henriot, Marie-Pierre
Marks & Clerk France
Conseils en Propriété Industrielle
Immeuble Visium
22, Avenue Aristide Briand
94117 Arcueil Cedex (FR)**

(56) Documents cités:
**US-A1- 2001 043 738**

• **MOURAGNON E ET AL: "Generic and real-time structure from motion using local bundle adjustment", IMAGE AND VISION COMPUTING, ELSEVIER, GUILDFORD, GB, vol. 27, no. 8, 2 juillet 2009 (2009-07-02), pages 1178-1193, XP026157408, ISSN: 0262-8856, DOI: 10.1016/J.IMAVIS.2008.11.006 [extrait le 2008-11-28]**

**Description**

Le domaine de l'invention est celui de la reconstruction 3D d'un environnement partiellement connu et de la localisation, par vision, d'une caméra dans cet environnement dans lequel elle évolue ; par environnement partiellement connu, on entend un environnement qui comprend un objet d'intérêt dont le modèle géométrique 3D est connu, l'environnement en dehors de l'objet étant inconnu.

Estimer la trajectoire d'une caméra est notamment utilisé dans des applications de réalité augmentée qui consiste à incruster des objets virtuels dans des images numériques d'une scène réelle. La principale difficulté des systèmes de réalité augmentée utilisant une seule caméra, est l'estimation la plus précise possible du recalage 3D entre la scène réelle (ou environnement réel) et les informations virtuelles 3D pour obtenir une fusion réaliste. Ce recalage nécessite de déterminer à tout instant la pose de la caméra, c'est-à-dire sa position et son orientation par rapport à un repère fixé sur la scène.

L'estimation de la pose d'une caméra par rapport une scène 3D est un sujet de recherche très actif.

La plupart des méthodes existant notamment pour le suivi d'objet 3D ne considèrent qu'une partie connue de la scène en l'occurrence la partie modélisée en 3D, d'un objet d'intérêt. Parmi ces méthodes, on distingue celles qui sont basées modèle ou « model-based tracking » en anglais, et celles qui sont basées sur l'apprentissage.

Les méthodes basées modèle consistent à calculer les 6 paramètres de poses de la caméra en minimisant pour chacune des images captées par la caméra, la distance entre les contours du modèle 3D projeté et les contours détectés dans l'image. Un exemple de telle méthode est décrit par Vincent Lepetit and Pascal Fua dans la publication « Monocular model-based 3d tracking of rigid objects: A survey », in FTCGV, 2005. La principale limitation de ces méthodes est qu'elles ne fonctionnent que si l'objet est toujours visible dans la séquence d'images. Pour obtenir une pose précise, il faut de plus que l'objet d'intérêt prenne une bonne partie de l'image, dit autrement soit « proche » de la caméra. De plus les mouvements de la caméra doivent être faibles pour pouvoir assurer le suivi 3D.

Les méthodes basées sur l'apprentissage requièrent une phase préalable dite d'apprentissage qui consiste à apprendre l'aspect photométrique (c'est-à-dire l'apparence) de l'objet. Cette phase consiste à enrichir le modèle 3D de l'objet par des descripteurs de texture extraits des images. Deux types d'apprentissage sont possibles :

- des marqueurs codés de positions connues sont placés autour de l'objet de manière à estimer la pose de la caméra pour quelques prises de vue. Un marqueur codé (aussi désignée cible codée) est un marqueur optique de taille connue facilement détectable dans l'image et identifiable grâce à son code. Pour chacune de ces prises de vue, des points d'intérêt sont extraits de l'image et caractérisés par la texture avoisinante, puis sont associés directement aux points 3D leur correspondant sur l'objet par une simple projection selon le point de vue de la caméra, ce dernier étant connu pour chacune de ces prises de vue grâce aux cibles codées. Un exemple est présenté par Juri Platonov and Hauke Heibel and Peter Meier and Bert Grollmann dans la publication "A mobile markerless AR system for maintenance and repair » In ISMAR, 2006.
- un nuage de points 3D est estimé en appariant des points 2D d'une séquence vidéo et en utilisant une technique de reconstruction par SfM, acronyme de l'expression anglo-saxonne « Structure from Motion ». Puis ce nuage de points 3D est recalé hors ligne et de manière semi automatique sur le modèle 3D de l'objet pour obtenir des points 3D appartenant au modèle, enrichis par des descripteurs extraits des images. On peut citer P. Lothe, S. Bourgeois, F. Dekeyser, E. Royer, and M. Dhome, qui décrivent un exemple de cette méthode dans la publication « Towards geographical referencing of monocular slam reconstruction using 3d city models: Application to real-time accurate vision-based localization », in CVPR, 2009. Une fois cette phase d'apprentissage réalisée, le calcul de poses en ligne est réalisé en associant les points 2D extraits de l'image courante avec les points 3D de l'objet en utilisant un critère de vraisemblance des descripteurs.

Les deux principales limitations de ces méthodes sont que d'une part, elles requièrent une phase préalable d'apprentissage et d'autre part elles sont très sensibles aux changements d'aspect photométrique de l'objet entre la phase d'apprentissage et la phase de calcul de pose (objets usés, variations des conditions d'illuminations). De plus, ces méthodes ne fonctionnent que sur des objets fortement texturés.

De manière globale, la principale limitation de ces méthodes ne considérant que la partie connue de l'objet, est qu'elles ne fonctionnent que si l'objet est toujours visible dans la séquence d'images. Si l'objet est totalement occulté ou s'il disparait du champ de vue de la caméra ces méthodes ne peuvent plus calculer la pose de la caméra.

Ces méthodes sont de plus sujettes au « jittering » (tremblements en réalité augmentée dus aux instabilités des poses calculées d'une image à l'autre) et pour que la pose soit estimée avec précision il faut que l'objet d'intérêt prenne une grande place dans l'image. En effet l'information de l'environnement n'est pas prise en compte dans l'estimation de la pose de la caméra.

D'autres méthodes considèrent une caméra évoluant dans un environnement totalement inconnu. Les méthodes de type SfM ou de type SLAM acronyme de l'expression anglo-saxonne « Simultaneous Localization And Mapping » estiment le mouvement d'une caméra sans connaissance a priori de la géométrie de la scène observée. Des méthodes hors ligne puis en ligne ont été proposées. Elles sont très stables car elles utilisent toute la scène observée pour se localiser. Elles consistent à estimer de manière incrémentale la trajectoire de la caméra et la géométrie de la scène. Pour cela, ces algorithmes exploitent les relations multi-vues (une vue étant une image) pour estimer le mouvement de la caméra, avec éventuellement une reconstruction 3D de la scène (sous forme de nuage de primitives 3D éparse : points, segments de droites...). Une étape supplémentaire d'optimisation qui consiste à raffiner simultanément les poses de la caméra et la scène 3D reconstruite est généralement réalisée. Cette dernière étape est appelée ajustement de faisceaux. Le principal inconvénient des algorithmes de type SLAM est qu'ils sont sujets à des accumulations d'erreurs et donc à une dérive de la trajectoire au cours du temps. Leur utilisation dans des applications qui demandent une grande précision du recalage à tout instant (exemple : la réalité augmentée) n'est donc pas envisageable sous leur forme d'origine. D'autre part, dans le cas monoculaire, la reconstruction est réalisée à une échelle arbitraire ; l'échelle réelle ne peut être connue que par l'ajout d'informations supplémentaires sur la métrique de la scène ; la reconstruction s'effectue également dans un repère arbitraire qui n'est pas relié à un objet de la scène.

Enfin, plus récemment, certaines méthodes tentent de combiner successivement ces deux approches. Des méthodes utilisant successivement une approche basée modèle puis des techniques de SfM ont été proposées pour estimer la pose de la caméra mobile dans un environnement partiellement connu. Bleser et al. dans « Online camera pose estimation in partially known and dynamic scenes », in ISMAR, 2006, exploitent les contraintes géométriques du modèle pour initialiser le repère et l'échelle de la reconstruction de l'algorithme SLAM. La localisation de la caméra est par la suite calculée par une méthode "classique" de type SLAM qui ne tient plus compte du modèle 3D.

La précision lors de l'initialisation n'est pas garantie puisqu'elle se fait sur une seule vue, de plus la méthode reste sujette à des accumulations d'erreurs numériques et à une dérive du facteur d'échelle. Comme nous l'avons précisé précédemment, la localisation basée sur les méthodes de type SLAM ou SfM ne permet pas une localisation précise à moyen et long terme : problèmes de dérive etc.

La méthode décrite par V. Gay-Bellile, P. Lothe, S. Bourgeois, E. Royer and S. Naudet-Collette dans « Augmented Reality in Large Environments: Application to Aided Navigation in Urban Context », in ISMAR, 2010, combine une technique de SLAM et une technique de relocalisation grâce à un apprentissage préalable. Elle permet donc de calculer la pose de la caméra lorsque l'objet n'est plus visible au moyen du SLAM et évite la dérive grâce à la relocalisation. Cependant cette méthode requiert une phase d'apprentissage préalable de type méthode basée sur l'apprentissage.

Ces deux dernières méthodes utilisent successivement les contraintes du modèle puis celles de l'environnement.

De manière similaire, une méthode utilisant successivement les contraintes de l'environnement puis celles du modèle a été proposée par Lothe et al. dans « Real-Time Vehicle Global Localisation with a Single Camera in Dense Urban Areas: Exploitation of Coarse 3D City Models », in CVPR, 2010. Dans ce cas une première reconstruction de l'environnement est réalisée, puis dans un second temps, un processus basé sur une méthode de type Iterative Closest Point (ICP) rigide permet de recaler la reconstruction sur le modèle. Il consiste à recaler lorsque cela est possible (c'est-à-dire lorsque le modèle apporte suffisamment de contraintes géométriques) la trajectoire de la caméra en utilisant uniquement l'information du modèle. L'inconvénient majeur de cette méthode est que, afin de conserver les contraintes multivues dans l'étape de recalage au modèle, ils appliquent une transformation similaire à l'ensemble des caméras inclues dans le processus, ce qui est une forte hypothèse en pratique. On retrouve le même inconvénient qu'avec les méthodes basées modèle : manque de précision et de robustesse lorsque l'on observe peu ou pas l'objet d'intérêt. D'autre part, cette méthode étant réalisée en deux étapes successives elle n'est pas optimale et n'assure pas une localisation temps réel précise à chaque instant : la correction grâce au modèle est apportée a posteriori donc la pose corrigée pour l'image courante est fournie avec un retard temporel rendant la méthode inadaptée à des applications telles que la réalité augmentée.

En conséquence, il demeure à ce jour un besoin pour un procédé de localisation de la caméra et de reconstruction 3D de l'environnement statique, dans lequel évolue la caméra, donnant simultanément satisfaction à l'ensemble des exigences précitées, en termes de précision, de robustesse, de stabilité et ceci en temps réel.

L'invention est définie par la revendication indépendante 1.

Selon l'invention, la localisation d'une caméra et la reconstruction 3D de l'environnement dans un environnement partiellement connu, combine simultanément lors de la phase d'optimisation d'un algorithme de type SLAM, les contraintes géométriques de la partie connue de l'environnement et les contraintes multi vues de la partie connue et inconnue de l'environnement.

Les poses de la caméra et les primitives 3D reconstruites constituant l'environnement, sont calculées par une unique fonction de coût à deux types de termes, qui combine les équations d'optimisation contraintes par la géométrie du modèle 3D pour les primitives appartenant à l'objet d'intérêt (=partie connue de l'environnement) et les équations d'optimisation classique pour les primitives appartenant à la partie non connue de l'environnement.

Plus précisément l'invention a pour objet un procédé de localisation d'une caméra et de reconstruction 3D de l'environnement statique dans lequel elle évolue et dont la caméra forme des images, cet environnement comportant un objet d'intérêt dont le modèle 3D est connu, qui comprend les étapes suivantes :

- a/ calcul d'une pose initiale de la caméra dans l'environnement et d'une reconstruction initiale,
- b/ calcul de la pose de la caméra pour chaque nouvelle image par appariement de primitives 3D de l'environnement avec des primitives 2D de ladite image et reconstruction de primitives 3D de l'environnement par triangulation,
- c/ optimisation simultanée des poses de la caméra et des primitives 3D par minimisation d'une erreur de reprojection sur plusieurs images.

Il est principalement caractérisé en ce que le modèle 3D est une description géométrique de l'objet d'intérêt, en ce que l'erreur de reprojection ne comporte que deux types de termes, un premier type de termes lié à des primitives contraintes par le modèle 3D et un deuxième type de termes lié à des primitives de l'environnement autre que l'objet, et en ce que l'étape d'optimisation comprend une sous-étape d'association des primitives à l'environnement ou au modèle 3D.

Comparé aux méthodes de type SLAM ou SfM classiques, cette approche améliore la robustesse du raffinement et la précision de la reconstruction de tout l'environnement ainsi que la localisation de la caméra même avec une scène (=environnement) de grande taille (nombreuses primitives 3D et nombreuses vues de la scène). Ceci est dû au fait que l'on intègre dans notre système une information absolue provenant du modèle géométrique 3D. De plus la reconstruction obtenue est à l'échelle réelle (obtenue grâce au modèle 3D).

Enfin, comparé aux méthodes de suivi basées modèle, la solution proposée est plus satisfaisante car elle ne nécessite pas de voir l'objet d'intérêt de la scène de manière continue. En effet même si l'objet en question n'est pas observé (ou s'il prend une faible partie de l'image) on sait toujours localiser la caméra dans l'environnement dans lequel elle évolue. La méthode est alors totalement robuste aux occultations partielles et même totales. On obtient également une meilleure stabilité de la localisation de la caméra.

Enfin, comparé aux méthodes qui utilisent les deux types d'information successivement, on est assuré de vérifier les deux types de contraintes simultanément à chaque instant. On obtient alors une localisation de la caméra ainsi qu'une reconstruction 3D plus précises, avec une méthode plus robuste.

On connait par ailleurs les méthodes décrites dans les documents US 2001/043738 A1 ainsi que Mouragnon E et al. : « Generic and real-time structure from motion using local bundle adjustment », IMAGE and VISION COMPUTING, Elsevier, vol. 27, no. 8, 2 juillet 2009, pages 1178 - 1193.

Les différences majeures de ce procédé par rapport à l'état de l'art sont qu'il:

- ne requiert aucune phase d'apprentissage préalable,
- ne nécessite pas de garder l'objet d'intérêt (de modèle 3D connu) dans le champ de vision de la caméra tout au long de sa trajectoire, dit autrement ne nécessite pas de voir l'objet dans chaque image,
- est robuste aux occultations et aux forts changements de distance caméra/objet,
- permet d'affiner naturellement une position initiale approximative,
- améliore la précision de la reconstruction 3D de l'environnement,
- fonctionne sur des objets texturés ou non texturés,
- garantit une grande stabilité entre deux poses successives (pas de tremblement souvent très gênant pour les applications de réalité augmentée par exemple),
- permet de reconstruire l'environnement et l'objet simultanément ce qui évite les effets de tremblement et d'imprécisions.

Finalement, on obtient un système de localisation très précis, robuste et stable.

Selon une caractéristique de l'invention, l'étape d'optimisation est réalisée avec un estimateur robuste présentant un seuil de rejet, en contrôlant de manière adaptative l'influence de chaque type de termes en fonction de ce seuil de rejet. De préférence, chaque type de termes de l'erreur de reprojection étant associé à un seuil de rejet lié audit seuil de rejet de l'estimateur robuste, les deux seuils de rejet ($c1$, $c2$) sont égaux au seuil de rejet de l'estimateur estimé sur des résidus basés sur le modèle 3D. Cela permet de favoriser les contraintes apportées par le modèle tout en conservant les contraintes multi images apportées par les primitives de l'environnement.

Le calcul de la pose initiale peut être réalisé de manière semi automatique, avec une cible, aussi désignée marqueur, de taille connue et positionnée par rapport à un des plans du repère de l'objet, une cible étant un ensemble de primitives 3D localisées entre elles et identifiables dans l'image, ceci permettant de fixer trois degrés de liberté, et la reconstruction initiale est obtenue par rétro-projection des primitives 2D sur le modèle.

Selon une caractéristique de l'invention, l'étape de calcul de la pose de la caméra pour chaque nouvelle image est réalisée à partir des contraintes du modèle 3D des primitives de l'objet d'intérêt et des primitives de l'environnement autre que l'objet.

L'étape d'optimisation peut être suivie d'une étape de triangulation dans laquelle les primitives ne sont pas contraintes par le modèle 3D.

Les étapes d'optimisation et/ou de reconstruction sont avantageusement réalisées uniquement pour des images clefs choisies lorsque le nombre de primitives appariées entre l'image courante et la dernière image clef est inférieur à une valeur minimale.

L'étape d'optimisation est avantageusement réalisée avec un ajustement de faisceaux local, ce qui permet d'obtenir un procédé temps réel.

Les primitives contraintes par le modèle 3D sont choisies selon que l'objet d'intérêt est texturé et/ou non texturé.

D'autres caractéristiques et avantages de l'invention apparaîtront à la lecture de la description détaillée qui suit, faite à titre d'exemple non limitatif et en référence aux dessins annexés dans lesquels :

la figure 1 représente schématiquement les principales étapes d'un procédé de localisation d'une caméra et de reconstruction 3D selon l'état de la technique,

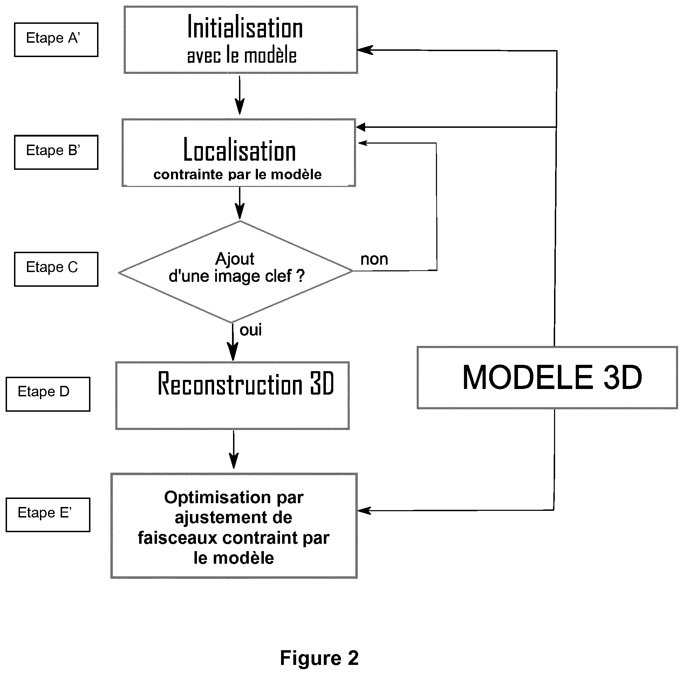

la figure 2 représente schématiquement les principales étapes d'un procédé de localisation d'une caméra et de reconstruction 3D selon l'invention.

L'invention repose sur une méthode de type SfM modifiée pour intégrer des contraintes géométriques liées à la connaissance du modèle d'un objet dans la scène. La scène aussi désignée environnement est statique, et l'objet ne change pas de localisation dans la scène, bien qu'il puisse lui-même être modifié au cours de la saisie de la séquence d'images (vidéo) par la caméra, des éléments de l'objet d'intérêt pouvant être déplacés ou enlevés au cours de la vidéo.

La description qui suit est faite dans le cadre d'une localisation de la caméra (estimation de sa trajectoire) et d'une modélisation (ou reconstruction) de l'environnement 3D dans lequel elle évolue.

Dans la suite on distingue pour l'environnement, la partie connue de celui-ci à savoir le modèle de l'objet, et la partie inconnue de l'environnement qui est l'environnement en dehors du modèle.

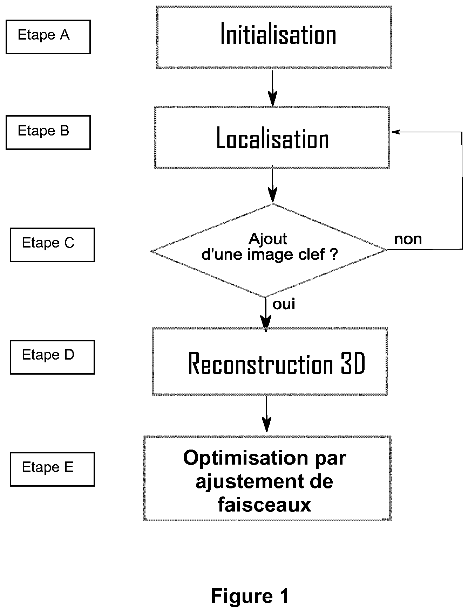

L'invention repose sur une méthode de SfM. Cette méthode de SfM dans sa version originale est identique à celle proposée par E. Mouragnon, M. Lhuillier, M. Dhome, F. Dekeyser, and P. Sayd. Dans « Real time localization and 3d reconstruction », in CVPR, 2006, utilisée pour des points d'intérêt mais qui peut s'appliquer à différents types de primitives. Dans sa version originale, cette méthode SfM classique décrite en relation avec la figure 1, comprend les quatre étapes suivantes : initialisation (étape A), localisation (étape B), reconstruction (étape D), optimisation (étape E). Notons d'emblé que les trois dernières peuvent être exécutées soit séquentiellement soit en parallèle.

L'initialisation consiste à réaliser une première reconstruction 3D de la scène observée et à calculer la première pose (position et rotation) de la caméra.

La localisation (aussi désignée Suivi 3D) consiste à calculer la pose de la caméra à partir de la mise en correspondances des primitives 3D de la scène déjà reconstruites avec les primitives 2D de l'image courante.

La reconstruction 3D consiste à apparier les primitives des images (suivi 2D) précédentes avec les primitives détectées dans l'image courante pour ainsi permettre la reconstruction 3D des primitives notamment les nouvelles, par triangulation 3D.

L'optimisation permet d'affiner la reconstruction 3D de la scène et la trajectoire de la caméra estimée. L'optimisation repose sur la minimisation d'une fonction de coût non linéaire en l'occurrence l'erreur de reprojection, qui permet ainsi de faire correspondre au mieux les primitives reconstruites reprojetées dans les images avec celles observées dans les images. Plusieurs méthodes peuvent être utilisées parmi lesquelles on peut citer l'ajustement de faisceau. Par ailleurs on peut également utiliser une méthode basée sur la géométrie épipolaire en minimisant une erreur 2D dans l'image, et selon laquelle la trajectoire est d'abord optimisée, la reconstruction de la scène étant optimisée dans un second temps.

Dans un souci de performance temps réel, les étapes de reconstruction 3D et d'optimisation ne sont pas réalisées à toutes les images mais uniquement pour certaines images appelées « image clef » (étape C). Elles sont choisies de manière classique connue de l'homme du métier, en effectuant un compromis entre le nombre de primitives appariées dans les images et un déplacement relatif entre les poses des caméras pour favoriser la reconstruction 3D effectuée par triangulation. Cela revient à choisir une image clef lorsque le nombre de primitives appariées entre l'image courante et la dernière image clef est inférieur à une valeur minimale.

Généralement, cette phase d'optimisation est effectuée avec un ajustement de faisceau qui permet d'optimiser simultanément la trajectoire et la reconstruction. L'optimisation par ajustement de faisceaux minimise la somme des erreurs de reprojection à savoir la somme des distances des primitives 3D projetées et des primitives 2D détectés.

On va détailler la phase d'optimisation basée sur un ajustement de faisceaux, en utilisant les notations suivantes.

Les vecteurs sont exprimés en coordonnées homogènes. On note par exemple $q \equiv (x,y,w,y)^T$ où $^T$ *est* la transposée et $\equiv$ l'égalité à un facteur d'échelle près. La reconstruction de la scène que l'on veut affiner est composée de N points 3D $\{Q_i\}_{i=1}^N$ et de m poses de la caméra $\{C_k\}_{k=1}^m$. Notons $q_{i,k}$ l'observation du point 3D $Q_i$ dans la caméra pour la pose $C_k$ et $A_i$ l'ensemble des indices de caméras observant $Q_i$. La matrice de projection $P_k$ associée à la pose de la caméra $C_k$ est donnée par $P_k = KR_k^T\left(I_3\middle|-t_k\right)$, où $K$ est la matrice des paramètres intrinsèques et $(R_k;t_k)$ les paramètres de la pose de la caméra à l'instant k. L'ajustement de faisceaux classique permet d'affiner simultanément les points 3D décrivant la scène observée et les poses de la caméra. Il minimise la somme des distances au carré entre les projections des points 3D dans les images et leurs observations. Cette distance géométrique est appelée l'erreur de reprojection ε. Les paramètres à optimiser sont les trois coordonnées des N points 3D et les six paramètres extrinsèques des m poses de la caméra. Le nombre total de paramètres est alors de 3N + 6m. La fonction de coût est donnée par :

$$\mathcal{E}\left(\{R_k, t_k\}_{k=1}^m, \{Q_i\}_{i=1}^N\right) = \sum_{i=1}^N \sum_{j \in \mathcal{A}_i} d^2(q_{i,j}, P_j Q_i),$$

Où $d^2(q,q')=\|q-q'\|^2$ est la distance au carré entre deux points dans l'image.

Selon l'invention, l'optimisation par ajustement de faisceaux, l'initialisation et éventuellement la localisation sont soumises aux contraintes du modèle 3D de l'objet d'intérêt.

On peut avantageusement réaliser une optimisation par ajustement local de faisceaux qui consiste en une optimisation des poses et des points 3D observés des N dernières images clefs en utilisant les résidus des observations de ces points dans les M dernières images clefs (N<=M et M pouvant aller jusqu'à l'ensemble des observations). L'intérêt est d'obtenir un procédé temps réel, avec une réduction de l'empreinte mémoire par rapport à un ajustement de faisceaux global. Le procédé a été mis en oeuvre avec N= 3.

Les primitives utilisées pour chacune des quatre phases, peuvent être des points d'intérêt, des segments de droites, des courbes, des plans, ou la combinaison de plusieurs types de primitives (par exemple, points + segments) ...

On va détailler ces phases.

Comme indiqué, ces contraintes du modèle 3D peuvent s'appliquer à l'initialisation (étape A'), qu'il s'agisse du calcul de la pose initiale ou de la reconstruction initiale.

Le calcul de pose initiale permet de calculer la position et l'orientation de la caméra par rapport à un repère fixé sur l'objet. Plusieurs méthodes peuvent être utilisées pour cette étape. Bleser et al. dans « Online camera pose estimation in partially known and dynamic scenes », in ISMAR, 2006, propose une méthode semi automatique qui consiste à faire recaler par l'utilisateur le modèle 3D sur l'objet dans l'image, ceci en déplaçant la caméra. L'utilisateur doit alors recaler les 6 degrés de liberté, jusqu'à ce que la pose soit détectée (de manière automatique) comme étant suffisamment proche de la réalité pour permettre un raffinement basé sur les contours de l'objet dans l'image. On propose une solution semi-automatique relativement similaire à celle de Bleser et al. mais beaucoup plus ergonomique pour l'utilisateur. Elle consiste à placer une cible de taille connue (de position non connue) sur un des plans du repère de l'objet. On fixe ainsi 3 degrés de liberté (2 rotations et 1 translation) estimés par la cible. L'utilisateur doit alors recaler les 3 derniers degrés de liberté. Un raffinement basé sur les contours de l'objet dans l'image est ensuite effectué. On appelle cible un ensemble de primitives 3D localisées entre elles et identifiables dans l'image. Notons que cette méthode de localisation et de reconstruction 3D ne nécessite qu'une pose initiale approximative (avec une tolérance jusqu'à 10% entre la distance caméra objet). Cette pose initiale éventuellement approximative, ne remet pas en cause la robustesse du procédé.

Une première reconstruction 3D des primitives est effectuée par rétro projection des points 2D détectés dans l'image initiale, sur le modèle 3D. On obtient alors un ensemble de points 3D appartenant au modèle, avec une précision grossière. La rétro projection consiste à effectuer pour chaque point 2D un lancer de rayon (faisceau passant par le centre optique de la caméra et le point 2D) et à calculer l'intersection entre ce faisceau et la surface de l'objet 3D.

Pour la phase de localisation 3D (étape B') qui peut être soumise aux contraintes du modèle mais pas nécessairement, la pose de la caméra est calculée à chaque nouvelle image en utilisant les appariements de primitives 3D/2D. La méthode utilisée (non soumise aux contraintes du modèle) est de même type que celle décrite par E. Mouragnon, M. Lhuillier, M. Dhome, F. Dekeyser, and P. Sayd. Dans « Real time localization and 3d reconstruction », in CVPR, 2006, utilisée pour des points d'intérêt mais qui peut s'appliquer à différents types de primitives.

La phase de reconstruction 3D est effectuée de manière classique par simple triangulation (étape D).

La phase d'optimisation (étape E') est soumise aux contraintes du modèle. Cette étape commence par une rétro-projection des primitives 2D de l'image courante dans l'espace 3D. On distingue ainsi les primitives appartenant à l'objet (leur faisceau optique coupant la surface de l'objet) des primitives 3D appartenant à l'environnement de l'objet.

Comme on l'a vu précédemment, l'optimisation avec un ajustement de faisceau classique consiste à minimiser la somme des erreurs de reprojection à savoir la somme des distances au carré entre les primitives 3D projetées et les primitives 2D détectées. Selon l'invention, la fonction de coût que l'on cherche à minimiser est également la somme de ces erreurs de reprojection (résidus), cependant la fonction de coût est composée de deux types de termes :

- un type de termes lié aux résidus des primitives contraintes par le modèle,
- un type de termes lié aux résidus des primitives de l'environnement hors modèle.

On décrit maintenant plus en détail comment on exploite les contraintes additionnelles fournies par le modèle 3D de l'objet. Les contraintes du modèle sont formulées différemment en fonction des primitives prises en compte. On détaille maintenant leur formulation pour les primitives suivantes : points d'intérêt et segments de droite.

On présente deux fonctions de coûts non linéaires combinant les relations multi vues (c'est-à-dire multi images) et les contraintes d'appartenance au modèle 3D. La première, basée points, peut s'appliquer aux objets texturés dont les primitives sont généralement des points d'intérêt. La seconde basée contours est appliquée aux objets très peu texturés. Elles ont en commun de minimiser une erreur résiduelle $\varepsilon$ exprimée en pixels. Elles peuvent être utilisées ensemble dans un ajustement de faisceau pour les objets présentant de la texture et des contours.

On considère dans un premier temps cette fonction de coût $\varepsilon$ pour des points. Nous supposons que le modèle est un ensemble de triangles décrivant les faces de l'objet (ensemble de plans $\pi$). L'idée principale est qu'un point 3D $Q_i$ appartenant à un plan $\pi_i$ a uniquement deux degrés de liberté.

Pour une optimisation de la localisation de la caméra et de la structure 3D de la scène, la fonction de coût obtenue est :

$$\mathcal{E}\left(\{R_j, t_j\}_{j=1}^m, \{Q_i\}_{i\in\mathcal{U}}, \{Q_i^{\pi_i}\}_{i\in\mathcal{M}}\right) = \underbrace{\sum_{i\in\mathcal{U}}\sum_{j\in\mathcal{A}_i}\rho\left(d^2(\mathbf{q}_{i,j}, P_jQ_i), c_1\right)}_{\text{Partie inconnue de l'environnement (E)}} + \underbrace{\sum_{i\in\mathcal{M}}\sum_{j\in\mathcal{A}_i}\rho\left(d^2(\mathbf{q}_{i,j}, P_jM^{\pi_i}Q_i^{\pi_i}), c_2\right)}_{\text{Partie connue de l'environnement (M)}}$$

sachant que $M^{\pi_i}$ est la matrice de transfert entre le repère du plan $\pi_i$ et le repère du monde telle que $Q_i = M^{\pi_i}Q_i^{\pi_i}$

$Q_i$ où $Q_i^{\pi_i} = \left(X^{\pi_i}, Y^{\pi_i}, 0, 1\right)^T$ et $(X^{\pi_i}, Y^{\pi_i})$ sont les coordonnées de $Q_i$ sur le repère du plan $\pi_i$,

que $c_1$, $c_2$ sont les seuils de rejet de l'estimateur robuste,

et que $\rho$ est une fonction estimateur robuste telle que $\rho(r,c) = r^2/(r^2+c^2)$, r étant l'erreur résiduelle d'une fonction de coût et c le seuil de rejet de l'estimateur.

Dans le cas où l'objet d'intérêt est non texturé, on utilise des contraintes modèles basées sur des segments de droite. Le modèle géométrique de l'objet est dans ce cas le modèle des contours. Ce modèle est alors échantillonné de manière automatique en E segments (de points milieu $\{M_i\}_{i=1}^E$ et directions $\{D_i\}_{i=1}^E$) qui sont projetés dans l'image. On effectue alors dans cette dernière une recherche de maximum de gradient dans la direction normale $n_{i,k}$ du segment projeté. Notons $m_{i,k}$ le maximum de gradient associé à la projection du point milieu $M_i$ dans la caméra $C_k$ et $S_i$ l'ensemble des indices de caméras observant $M_i$. La distance (en pixels) entre le point milieu du segment reprojeté dans l'image et le maximum de gradient associé, est alors utilisée pour contraindre la trajectoire de la caméra et la reconstruction 3D des primitives de l'environnement inconnu, la fonction de coût résultante est :

$$\mathcal{E}\left(\{R_j, \mathbf{t}_j\}_{j=1}^m, \{Q_i\}_{i=1}^N\right) = \underbrace{\sum_{i=1}^N\sum_{j\in\mathcal{A}_i}\rho\left(d^2(\mathbf{q}_{i,j}, P_jQ_i), c_1\right)}_{\text{Partie inconnue de l'environnement (E)}} + \underbrace{\sum_{i=1}^E\sum_{j\in\mathcal{S}_i}\rho\left(\left|\mathbf{n}_{i,j}\cdot\left(\mathbf{m}_{i,j} - P_j\mathbf{M}_i\right)\right|, c_2\right)}_{\text{Partie connue de l'environnement (M)}}$$

La solution proposée est robuste aux imperfections du recalage initial et aux imperfections géométriques du modèle (modèle non parfaitement conforme à la réalité). En effet un mauvais recalage initial ou des imperfections géométriques du modèles et la dérive induite par les algorithmes de type SfM peuvent introduire de mauvaises associations primitive-modèle qui peuvent empêcher la convergence du processus d'optimisation. Pour gérer ces associations aberrantes une estimation robuste est effectuée avec le M-estimateur. On utilise par exemple l'estimateur de Geman-McClure qui a pour particularité d'être normalisé.

L'une des grandes difficultés dans la minimisation d'un problème bi-objectif est de contrôler l'influence de chaque terme. Cela est généralement effectué en utilisant un paramètre de pondération qui est fixé expérimentalement ou alors en utilisant la validation croisée telle que décrite par Michela Farenzena, Adrien Bartoli, and Youcef Mezouar dans « Efficient camera smoothing in sequential structure-frommotion using approximate cross-validation » in ECCV, 2008. On propose une alternative plus simple : l'influence de chaque type de terme(s) est directement contrôlée en utilisant le seuil de rejet de l'estimateur robuste calculé par la médiane des écarts absolus des résidus qui se note usuellement MAD (Médian of Absolute Déviation). L'intérêt de cette méthode dite pondération adaptative, validée expérimentalement, est qu'elle permet une pondération automatique en temps réel. On envisage par exemple trois possibilités :

- $c1=c_{environnement}$ et $c2=c_{modèle}$,
- $c1=c2=c_{tous}$,
- $c1=c2=c_{modèle}$,

$c_{modèle}$ étant le seuil de rejet estimé sur les résidus basés modèle,

$c_{environnement}$ étant le seuil de rejet estimé sur les résidus des parties inconnues de l'environnement,

$c_{tous}$ étant le seuil de rejet estimé sur tous les résidus.

En posant $c1=c2=c_{tous}$, on considère de manière arbitraire que les deux types de résidus ont le même ordre de grandeur ; alors que dans les deux autres cas, on tient compte de ce que les résidus associés au modèle ont dans la pratique des valeurs plus élevées. Dans le premier cas, les parties connues (modèle) et inconnues de l'environnement sont considérées de manière identique ; dans le troisième cas, les parties connues (modèle) sont favorisées pendant l'optimisation tout en garantissant que les contraintes associées à la partie inconnue de l'environnement sont toujours vérifiées. Ce troisième cas est privilégié.

Comparé à l'optimisation classique, l'optimisation avec contraintes au modèle nécessite donc des étapes additionnelles. En effet, pour réaliser les contraintes au modèle, les primitives doivent être associées au modèle (association 2D ou 3D en fonction de la contrainte choisie). Deux types d'associations sont possibles générant des contraintes différentes :

- Phase d'association 3D-3D : les primitives 3D reconstruites (points 3D, segments 3D) sont associées aux plans ou aux arrêtes du modèle. Pour une primitive donnée, la contrainte au modèle s'applique sur la primitive en question ainsi que sur la trajectoire de la caméra dans la phase d'optimisation. La contrainte peut se traduire par le nombre de degrés de liberté attribués à la primitive 3D en fonction de la partie du modèle à laquelle elle a été associée (exemples : un point 3D reconstruit et non associé au modèle possède 3 degrés de liberté alors qu'un point 3D reconstruit et associé à un plan du modèle possède 2 degrés de liberté car il ne peut évoluer que dans le plan dans lequel il a été associé. Un segment 3D reconstruit et non associé au modèle possède au minimum 4 degrés de liberté alors qu'un segment 3D reconstruit et associé à un plan du modèle possède 2 degrés de liberté ; un segment 3D reconstruit et associé à une arrête du modèle possède 1 degré de liberté).
- Phase d'association 3D-2D : les primitives 3D extraites du modèle (points 3D, segments 3D) sont reprojetées dans les images et associées à des primitives 2D (points 2D, segments 2D, contours 2D). La contrainte se traduit alors par le fait qu'un point ou un segment 3D extrait du modèle possède zéro degré de liberté. Il est uniquement utilisé pour contraindre la trajectoire de la caméra dans la phase d'optimisation.

L'étape d'optimisation (E') comprend ainsi les sous étapes suivantes :

1. Association des primitives à l'environnement ou au modèle :
Parmi les exemples de primitives, on peut citer :

a. Cas des points reconstruits : projections de chaque point 3D $Q_i$() sur son plan $\pi_i$ associé, le plan associé au point 3D étant celui coupé par le maximum de faisceaux optiques créés par les observations 2D associées à ce même point 3D.

b. Cas des segments reconstruits : projection de chaque segment 3D sur son plan $\pi_i$ associé, le plan associé au segment 3D étant celui coupé par le maximum de faisceaux optiques créés par les observations 2D associées à ce même segment 3D.

c. Cas des points 3D extraits du modèle : projection des points 3D visibles dans chacune des images clefs incluses dans l'optimisation et association 2D aux points d'intérêt détectés dans ces images

d. Cas des segments 3D extraits du modèle : projection des segments 3D visibles dans chacune des images clef incluses dans l'optimisation et association 2D aux contours dans ces images.

2. Calcul des seuils de rejet de l'estimateur.
3. Optimisation de l'erreur $\varepsilon$ de l'estimateur.

L'ajustement de faisceau ainsi proposé repose donc sur :

- une fonction bi-objective comprenant un type de terme(s) contraint par le modèle 3D et un type de terme(s) pour les contraintes multi-vues des primitives de l'environnement inconnu,
- un réglage adaptatif de l'influence entre ces deux types terme(s) par les seuils de rejet $c_1$ et $c_2$.

Ce procédé permet de s'adapter aux imperfections du modèle, aux variations locales de l'objet ou encore à des occultations de l'objet.

Par exemple, si l'objet visualisé est localement modifié (en raison par exemple du démontage d'une partie de l'objet), l'algorithme va automatiquement s'adapter à ce changement. Plus exactement grâce au contrôle adaptatif des seuils de rejet (déterminé automatiquement), des primitives initialement contraintes par le modèle vont être soit rejetées, soit identifiées comme primitives appartenant à l'environnement inconnu (elles interviendront donc dans le premier terme de la fonction de coût). Le même phénomène va se reproduire si l'objet est occulté partiellement ou même entièrement.

Ainsi le procédé selon l'invention est naturellement robuste à des imperfections de modèle : il fonctionne même si le modèle géométrique de l'objet d'intérêt n'est pas exactement le même que celui de l'objet en question. Le procédé est de même robuste si l'objet est modifié légèrement durant la séquence. Cela est dû au fait qu'on ne force pas les primitives à appartenir au modèle lors de l'étape de reconstruction D ce qui permet de remettre en cause l'association primitive-modèle à chaque étape d'optimisation E'.

Sur le même principe, il est également possible d'optimiser uniquement la trajectoire de la caméra et d'optimiser la géométrie de la scène de manière induite. Ceci est obtenu en supprimant les paramètres de position des primitives de l'optimisation. L'intérêt est de réduire l'empreinte mémoire et aussi d'augmenter le bassin de convergence de la méthode (moins de paramètres à optimiser). Pour cela on n'utilisera plus un ajustement de faisceau mais on peut utiliser d'autres fonctions de coût basées sur la géométrie épipolaire (exemple : matrice fondamentale pour les primitives de l'environnement, homographie pour les primitives associées à un des différents plans composant le modèle). On note dans ce cas, que pour retrouver la géométrie de la scène il suffit de trianguler les primitives après avoir affiner la trajectoire de la caméra.

La géométrie épipolaire définit les relations géométriques entre deux images d'une même scène captées par une caméra à partir de deux positions distinctes. Elle relie les deux observations $(q_{i,1}, q_{i,2})$ d'un point 3D $Q_i$ par la matrice fondamentale de la manière suivante : $q_{i,2}^T F q_{i,1} = 0$ où F est une matrice de taille 3 x 3 de rang 2, On note, $F_{j,k}$ la matrice fondamentale entre la paire d'images (j,k).

Cette relation signifie que tout point $q_{i,2}$ de la seconde image correspondant au point $q_{i,1}$ de la première image doit être sur la ligne épipolaire I telle que $I = F q_{i,1}$.

On désigne $d_l(q,l)$ la distance point à ligne entre un point q et une ligne I par :

$$d_l^2(q,l) = \frac{(q^T l)^2}{\|l\|^2 \omega^2}$$

$\omega$ étant le dernier élément du vecteur q exprimé en coordonnées homogènes.

Dans une géométrie à deux angles de vue, deux images d'un même plan $\pi$ sont liées par une homographie H telle que : $q_{i,1} \sim H\, q_{i,2}$.

C'est l'équivalent de la relation précédente de la géométrie épipolaire pour le plan. L'homographie H induite par le plan $\pi$ est :

$$H = K(R - \frac{t n^T}{d})K^{-1}$$

où n est la normale au plan et d la distance entre C1 et le plan.

On note $H_{j,k}^{\pi_i}$ l'homographie induite par l'observation du plan $\pi_i$ à partir des positions j et k de la caméra.

Lorsqu'on ne cherche qu'à optimiser la localisation de la caméra, la fonction de coût obtenue est alors :

$$\varepsilon\left(\{(R,t)p \rightarrow p+1\}_{p=1}^{m-1}\right) = \underbrace{\sum_{i \in U}\sum_{j \in A_i}\sum_{k \in A_i}^{k \neq j}\rho(d_l^2(q_{i,j}, F_{j,k}q_{i,k}), c_1)}_{\text{Partie inconnue de l'environnement (E)}} + \underbrace{\sum_{i \in M}\sum_{j \in A_i}\sum_{k \in A_i}^{k \neq j}\rho(d^2(q_{i,j}, H_{j,k}^{\pi_i}q_{i,k}), c_2)}_{\text{Partie connue de l'environnement (M)}}$$

Chacune des erreurs de rétroprojection présentées ne comporte que deux termes. Plus généralement elle ne comporte que deux types de termes, l'un contraint par le modèle 3D et l'autre pour les contraintes multi-vues des primitives de l'environnement inconnu, chaque type de termes pouvant lui-même comporter plusieurs termes. On peut en effet séparer l'environnement inconnu en deux parties, avec un terme pour une partie texturée et un autre pour la partie non texturée ; de même pour la partie connue de l'environnement (modèle) qui comprendrait également deux termes selon les parties texturées ou non du modèle.

Plusieurs applications nécessitent un suivi d'objets 3D :

- La réalité augmentée qui consiste à ajouter dans une scène réelle des informations virtuelles superposées (sur le flux vidéo d'une caméra ou sur la vue directe de l'utilisateur si celui-ci utilise des lunettes semi transparentes). Le concept de la réalité augmentée vise ainsi à accroître notre perception du monde réel, en y ajoutant des éléments fictifs, non visibles a priori. Ses applications sont multiples et touchent de plus en plus de domaines : jeux vidéo, cinéma et télévision (studios virtuels, retransmissions sportives...), industrie (conception, design, maintenance, assemblage, robotique...), médical, etc.
- Le domaine de la robotique : dans le cadre du guidage ou de l'asservissement de robot par vision (navigation autonome) ou de bras robotisés pour la manipulation d'objets spécifiques.
- L'industrie automobile : dans le cadre de l'aide à la navigation pour les véhicules en milieu urbain.

Pour toutes ces applications, la vision par ordinateur offre alors une solution peu coûteuse, pratique et non invasive.

La caméra est calibrée et ses paramètres intrinsèques (focale, point central de l'image) sont connus.

Les images proviennent d'un flux temps réel ou d'une vidéo préenregistrée.

**Revendications**

1. Procédé de localisation d'une caméra et de reconstruction 3D de l'environnement statique dans lequel elle évolue et dont la caméra forme des images, cet environnement comportant un objet d'intérêt dont le modèle 3D est connu, qui comprend les étapes suivantes :

    - a/ calcul d'une pose initiale de la caméra dans l'environnement et d'une reconstruction initiale,
    - b/ calcul de la pose de la caméra pour chaque nouvelle image par appariement de primitives 3D de l'environnement avec des primitives 2D de ladite image et reconstruction de primitives 3D de l'environnement par triangulation,
    - c/ optimisation simultanée des poses de la caméra et des primitives 3D par minimisation d'une erreur de reprojection sur plusieurs images,

    dans lequel le modèle 3D est une description géométrique de l'objet d'intérêt, l'erreur de reprojection ne comporte que deux types de termes, un premier type de termes lié à des primitives contraintes par le modèle 3D et un deuxième type de termes lié à des primitives de l'environnement autre que l'objet, et l'étape d'optimisation comprend une sous-étape d'association des primitives à l'environnement ou au modèle 3D, le procédé étant **caractérisé en ce que** l'étape d'optimisation est réalisée avec un estimateur robuste présentant un seuil de rejet, en contrôlant de manière adaptative l'influence de chaque type de termes en fonction du seuil de rejet.

2. Procédé de localisation d'une caméra et de reconstruction 3D de l'environnement selon la revendication 1, **caractérisé en ce que** chaque type de termes de l'erreur de reprojection étant associé à un seuil de rejet lié audit seuil de rejet de l'estimateur robuste, les deux seuils de rejet c1, c2 sont égaux au seuil de rejet de l'estimateur estimé sur des résidus basés sur le modèle 3D.

3.  Procédé de localisation d'une caméra et de reconstruction 3D de l'environnement selon l'une des revendications précédentes, **caractérisé en ce que** le calcul de la pose initiale est réalisé de manière semi automatique, avec une cible de taille connue et positionnée par rapport à un des plans du repère de l'objet, une cible étant un ensemble de primitives 3D localisées entre elles et identifiables dans l'image, et **en ce que** la reconstruction initiale est obtenue par rétro-projection des primitives 2D sur le modèle.

4.  Procédé de localisation d'une caméra et de reconstruction 3D de l'environnement selon l'une des revendications précédentes, **caractérisé en ce que** l'étape de calcul de la pose de la caméra pour chaque nouvelle image est réalisée à partir des primitives contraintes par le modèle 3D et des primitives de l'environnement autre que l'objet.

5.  Procédé de localisation d'une caméra et de reconstruction 3D de l'environnement selon l'une des revendications précédentes, **caractérisé en ce que** l'étape d'optimisation est suivie d'une étape de triangulation dans laquelle les primitives ne sont pas contraintes par le modèle 3D.

6.  Procédé de localisation d'une caméra et de reconstruction 3D de l'environnement selon l'une des revendications précédentes, **caractérisé en ce que** l'étape de reconstruction 3D et/ou l'étape d'optimisation sont réalisées uniquement pour des images clefs choisies lorsque le nombre de primitives appariées entre l'image courante et la dernière image clef est inférieur à une valeur minimale.

7.  Procédé de localisation d'une caméra et de reconstruction 3D de l'environnement selon l'une des revendications précédentes, **caractérisé en ce que** l'étape d'optimisation est réalisée avec un ajustement de faisceaux local.

8.  Procédé de localisation d'une caméra et de reconstruction 3D de l'environnement selon l'une des revendications précédentes, **caractérisé en ce que** les images proviennent d'un flux temps réel ou d'une vidéo préenregistrée.

9.  Procédé de localisation d'une caméra et de reconstruction 3D de l'environnement selon l'une des revendications précédentes, **caractérisé en ce que** l'objet d'intérêt n'est pas visible dans certaines images ou est modifié d'une image à l'autre.

10. Procédé de localisation d'une caméra et de reconstruction 3D de l'environnement selon l'une des revendications précédentes, **caractérisé en ce que** les primitives contraintes par le modèle 3D sont choisies en fonction de ce que l'objet est texturé et/ou non.

**Patentansprüche**

1.  Verfahren zum Lokalisieren einer Kamera und 3D-Rekonstruktion einer statischen Umgebung, in welcher sich diese bewegt und von welcher die Kamera Bilder erzeugt, wobei diese Umgebung ein bestimmtes Objekt beinhaltet, dessen 3D-Modell bekannt ist, welches folgende Schritte beinhaltet:

    - a/ Berechnen einer Anfangspose der Kamera in der Umgebung und einer Anfangsrekonstruktion,
    - b/ Berechnen der Pose der Kamera für jedes neue Bild durch Paaren von 3D-Grundkörpern der Umgebung mit 2D-Grundkörpern des Bildes und Rekonstruktion von 3D-Grundkörpern der Umgebung durch Triangulierung,
    - c/ gleichzeitiges Optimieren der Kameraposen und der 3D-Grundkörper durch Minimieren eines Reprojektionsfehlers auf mehreren Bildern,

    wobei das 3D-Modell eine geometrische Beschreibung des bestimmten Objekts ist, wobei der Reprojektionsfehler nur zwei Arten von Termen beinhaltet, wobei eine erste Termenart in Verbindung mit Grundkörpern steht, die durch das 3D-Modell eingeschränkt sind, und eine zweite Termenart in Verbindung mit Grundkörpern der Umgebung steht, welche sich vom Objekt unterscheiden, und der Optimierungsschritt einen Unterschritt der Assoziation der Grundkörper mit der Umgebung oder dem 3D-Modell beinhaltet,
    wobei das Verfahren sich **dadurch kennzeichnet, dass** der Optimierungsschritt mit einem robusten Schätzer durchgeführt wird, welcher eine Unterdrückungsgrenze aufweist, indem adaptiv der Einfluss einer jeden Termenart angesichts der Unterdrückungsgrenze geprüft wird.

2.  Verfahren zum Lokalisieren einer Kamera und 3D-Rekonstruktion der Umgebung nach Anspruch 1, **dadurch ge-**

**kennzeichnet, dass** jede Termenart des Reprojektionsfehlers mit einer Unterdrückungsgrenze assoziiert ist, welche mit der Unterdrückungsgrenze des robusten Schätzers in Verbindung steht, wobei die beiden Unterdrückungsgrenzen $c_1$, $c_2$ der Unterdrückungsgrenze des Schätzers entsprechen, welche anhand von Rückständen, welche auf dem 3D-Modell basieren, geschätzt wird.

3. Verfahren zum Lokalisieren einer Kamera und 3D-Rekonstruktion der Umgebung nach einem der vorhergehenden Ansprüche, **dadurch gekennzeichnet, dass** die Berechnung der Anfangspose halbautomatisch erfolgt, mit einem Ziel bekannter Größe, welches in Bezug auf eine Ebene des Koordinatensystems des Objekts positioniert ist, wobei ein Ziel eine Gruppe von zueinander lokalisierten 3D-Grundkörpern ist, welche im Bild identifizierbar sind, und dadurch, dass die Anfangsrekonstruktion durch eine Rückprojektion der 2D-Grundkörper auf das Modell erzielt wird.

4. Verfahren zum Lokalisieren einer Kamera und 3D-Rekonstruktion der Umgebung nach einem der vorhergehenden Ansprüche, **dadurch gekennzeichnet, dass** der Berechnungsschritt der Kamerapose für jedes neue Bild anhand der durch das 3D-Modell eingeschränkten Grundkörper und der sich vom Objekt unterscheidenden Grundkörper der Umgebung erfolgt.

5. Verfahren zum Lokalisieren einer Kamera und 3D-Rekonstruktion der Umgebung nach einem der vorhergehenden Ansprüche, **dadurch gekennzeichnet, dass** der Optimierungsschritt von einem Triangulierungsschritt gefolgt ist, bei welchem die Grundkörper nicht durch das 3D-Modell eingeschränkt sind.

6. Verfahren zum Lokalisieren einer Kamera und 3D-Rekonstruktion der Umgebung nach einem der vorhergehenden Ansprüche, **dadurch gekennzeichnet, dass** der 3D-Rekonstruktionsschritt und/oder der Optimierungsschritt nur für gewählte Schlüsselbilder erfolgt, wenn die Anzahl der gepaarten Grundkörper zwischen dem laufendem Bild und dem letzten Bild einen Mindestwert unterschreitet.

7. Verfahren zum Lokalisieren einer Kamera und 3D-Rekonstruktion der Umgebung nach einem der vorhergehenden Ansprüche, **dadurch gekennzeichnet, dass** der Optimierungsschritt mit einer lokalen Strahlenbündeljustierung erfolgt.

8. Verfahren zum Lokalisieren einer Kamera und 3D-Rekonstruktion der Umgebung nach einem der vorhergehenden Ansprüche, **dadurch gekennzeichnet, dass** die Bilder von einem Echtzeitfluss oder einem voraufgezeichneten Video stammen.

9. Verfahren zum Lokalisieren einer Kamera und 3D-Rekonstruktion der Umgebung nach einem der vorhergehenden Ansprüche, **dadurch gekennzeichnet, dass** das bestimmte Objekt in einigen Bildern nicht sichtbar ist, oder von einem Bild zum anderen verändert wird.

10. Verfahren zum Lokalisieren einer Kamera und 3D-Rekonstruktion der Umgebung nach einem der vorhergehenden Ansprüche, **dadurch gekennzeichnet, dass** die durch das 3D-Modell eingeschränkten Grundkörper danach ausgewählt werden, ob das Objekt strukturiert und/oder nicht strukturiert ist.


**Claims**

1. A method for locating a camera and for the 3D reconstruction of the static environment in which it is moving and of which the camera forms images, this environment comprising an object of interest of which the 3D model is known, which comprises the following steps:

   - a/ calculation of an initial pose of the camera in the environment and of an initial reconstruction,
   - b/ calculation of the pose of the camera for each new image by matching 3D primitives of the environment with 2D primitives of said image and reconstructing 3D primitives of the environment by triangulation,
   - c/ simultaneous optimization of the poses of the camera and of the 3D primitives by minimizing a reprojection error over a plurality of images,

   wherein the 3D model is a geometric description of the object of interest, the reprojection error comprises only two types of terms, a first type of terms linked to primitives constrained by the 3D model and a second type of terms linked to primitives of the environment other than the object, and the optimization step comprises a substep of associating primitives with the environment or with the 3D model,

the method being **characterized in that** the optimization step is performed with a robust estimator exhibiting a rejection threshold, by adaptively controlling the influence of each type of terms as a function of the rejection threshold.

2. The method for locating a camera and for the 3D reconstruction of the environment according to claim 1, **characterized in that**, each type of terms of the reprojection error being associated with a rejection threshold linked to said rejection threshold of the robust estimator, the two rejection thresholds c1, c2 are equal to the rejection threshold of the estimator estimated on residues based on the 3D model.

3. The method for locating a camera and for the 3D reconstruction of the environment according to one of the preceding claims, **characterized in that** the calculation of the initial pose is performed semi-automatically, with a target of known size and positioned relative to one of the planes of the reference frame of the object, a target being a set of 3D primitives located between them and identifiable in the image, and **in that** the initial reconstruction is obtained by back-projection of the 2D primitives onto the model.

4. The method for locating a camera and for the 3D reconstruction of the environment according to one of the preceding claims, **characterized in that** the step of calculating the pose of the camera for each new image is performed on the basis of the primitives constrained by the 3D model and of the primitives of the environment other than the object.

5. The method for locating a camera and for the 3D reconstruction of the environment according to one of the preceding claims, **characterized in that** the optimization step is followed by a triangulation step in which the primitives are not constrained by the 3D model.

6. The method for locating a camera and for the 3D reconstruction of the environment according to one of the preceding claims, **characterized in that** the 3D reconstruction step and/or the optimization step are performed only for key images chosen when the number of primitives matched between the current image and the last key image is lower than a minimum value.

7. The method for locating a camera and for the 3D reconstruction of the environment according to one of the preceding claims, **characterized in that** the optimization step is performed with a local bundle adjustment.

8. The method for locating a camera and for the 3D reconstruction of the environment according to one of the preceding claims, **characterized in that** the images originate from a real time video stream and from a prerecorded video.

9. The method for locating a camera and for the 3D reconstruction of the environment according to one of the preceding claims, **characterized in that** the object of interest is not visible in certain images or is modified from one image to another.

10. The method for locating a camera and for the 3D reconstruction of the environment according to one of the preceding claims, **characterized in that** the primitives constrained by the 3D model are chosen as a function of whether the object is textured and/or untextured.

| Etape A | **Initialisation** |
| Etape B | **Localisation** |
| Etape C | Ajout d'une image clef ? — non |
| | oui |
| Etape D | **Reconstruction 3D** |
| Etape E | **Optimisation par ajustement de faisceaux** |

**Figure 1**

| | |
|---|---|
| Etape A' | **Initialisation**<br>**avec le modèle** |
| Etape B' | **Localisation**<br>**contrainte par le modèle** |
| Etape C | Ajout<br>d'une image clef ?    non |
| | oui |
| Etape D | **Reconstruction 3D** |
| Etape E' | **Optimisation par**<br>**ajustement de**<br>**faisceaux contraint par**<br>**le modèle** |

MODELE 3D

**Figure 2**

## RÉFÉRENCES CITÉES DANS LA DESCRIPTION

**Documents brevets cités dans la description**

- US 2001043738 A1

**Littérature non-brevet citée dans la description**

- **VINCENT LEPETIT ; PASCAL FUA.** Monocular model-based 3d tracking of rigid objects: A survey. *FTCGV,* 2005
- **JURI PLATONOV ; HAUKE HEIBEL ; PETER MEIER ; BERT GROLLMANN.** A mobile markerless AR system for maintenance and repair. *ISMAR,* 2006
- Towards geographical referencing of monocular slam reconstruction using 3d city models: Application to real-time accurate vision-based localization. *CVPR,* 2009
- **BLESER et al.** Online camera pose estimation in partially known and dynamic scenes. *ISMAR,* 2006
- **V. GAY-BELLILE ; P. LOTHE ; S. BOURGEOIS ; E. ROYER ; S. NAUDET-COLLETTE.** Augmented Reality in Large Environments: Application to Aided Navigation in Urban Context. *ISMAR,* 2010

- **LOTHE et al.** Real-Time Vehicle Global Localisation with a Single Camera in Dense Urban Areas: Exploitation of Coarse 3D City Models. *CVPR,* 2010
- Generic and real-time structure from motion using local bundle adjustment. **MOURAGNON E et al.** IMAGE and VISION COMPUTING. Elsevier, 02 Juillet 2009, vol. 27, 1178-1193
- **E. MOURAGNON ; M. LHUILLIER ; M. DHOME ; F. DEKEYSER ; P. SAYD.** Real time localization and 3d reconstruction. *CVPR,* 2006
- **MICHELA FARENZENA ; ADRIEN BARTOLI ; YOUCEF MEZOUAR.** Efficient camera smoothing in sequential structure-frommotion using approximate cross-validation. *ECCV,* 2008